# EUROPEAN PATENT APPLICATION

(11) **EP 2 187 622 A1**
(43) Date of publication of application: **19.05.2010**
(21) Application number: 08168900.2
(22) Date of filing: 12.11.2008
(51) Int. Cl.: H04N 5/225

(54) **Camera assembly**

(71) Applicant: Axis AB, 223 69 Lund (SE)
(72) Inventor: Lundberg, Stefan, 224 56 Lund (SE)
(74) Representative: Milanov, Nina Vendela Maria

(57) **Abstract**

Camera assembly (100) comprising: a camera (110) arranged to be panable and tiltable, a transparent view port cover (120). The transparent view port cover (120) comprises a first part (130) and a second part (140), the first part (130) and the second part (140) are arranged to present different angles of view to the camera (110), and the second part (140) comprises a lens.

## Description

### Technical Field

The present invention relates to a camera assembly comprising a camera arranged to be panable and tiltable, anda transparent view port cover.

### Background

Surveillance cameras are used for monitoring of different premises. Dome cameras with panning, tilting and zooming (PTZ) capabilities are commonly installed in monitoring systems. In some monitoring systems it may be advantageous to arrange a camera system having such panning and tilting capabilities to quickly switch between a pan/tilt view, having a limited view angle, to an overview panorama image. However, such dome camera systems that are able to quickly switch between an overview image and a pan/tilt surveillance image view are often complicated, bulky, and expensive.

WO 2008079862 discloses a wide-angle high-resolution imaging system that includes a wide-angle imaging device and a high-resolution camera having pan, tilt and zoom capabilities that are mounted to single enclosure such that neither camera occludes the field-of-view accessible to each other.

The construction of WO 2008079862 requires a large and bulky enclosure in order to be able to arrange two cameras on the same platform. Furthermore, having the PTZ camera rotating around the wide-angle imaging device may produce mechanical problems especially problems with the balance of the camera system since the center of mass of the camera assembly will rotate as the PTZ camera rotates. One way to solve this problem could be by introducing a counter weight placed at the opposite side of the PTZ camera. This however would make the whole assembly much heavier. Moreover, this system is expensive due to the complex design and the two cameras. Furthermore, having two cameras and a complex design implies that the probability for malfunctioning increases.

### Summary of the Invention

In view of the above, an objective of the invention is to provide an improved camera assembly.

Generally, the above objective is achieved by the attached independent patent claims.

Particularly, according to a first aspect, the present invention is realized by a camera assembly comprising a camera arranged to be panable and tiltable, a transparent view port cover, the transparent view port cover comprising a first part and a second part, the first part and the second part being arranged to present different angles of view to the camera, and the second part comprising a lens.

This is advantageous in that it is a simple construction for making it possible to achieve a quick switch between acquisition of images having different angles of view, i.e. through the first part and through the second part. An additional advantage is that the field of view of the camera can be used more effectively. The present invention is also based on the understanding that the part of the field of view of conventional dome cameras that depicts the area just below the camera usually provides a quite small amount of information. For example, if a group of people standing right below the camera is imaged, this image only depicts the top of the heads of the group of people. It can hence be detected that there is a group of people standing directly below the camera, but it is not possible to extract that much more information about the people. Personal features like what the people are wearing, how tall they are or their facial features, which are interesting for surveillance purposes, could however not be extracted from this view. The present invention however, makes the image information acquired by the camera when directed in this direction useful If the angle of view presented by the second part is larger than the angle of view presented by the first part this can be advantageous in that the camera is provided with more information without moving the camera about the area imaged by the camera.

The transparent view port cover may be arranged to at least partly enclose the camera. This is advantageous in that the camera is protected by the transparent view port cover.

The transparent view port cover may be of substantially spherical shape. A substantially spherical shape is advantageous in that it is robust and in that it allows the optical input of the camera to operate close to the transparent view port cover through simple rotational movements of the camera while optical quality is maintained.

The second part may be arranged at a point where a symmetry axis of the transparent view port cover intersects the transparent view port cover. Although the second part is arranged at this point and thus affects the image quality of the view corresponding to the view that a camera without the second part would have imaged this is a small sacrifice in relation to the advantages in terms of the optical capabilities that by arranging the second part at this point.

Another way to define the placement of the second part could be by referring to a geometrical center line of the camera assembly instead of the symmetry axis of the transparent view port cover.

The second part may be arranged next to a point where a symmetry axis of the transparent view port cover intersects the transparent view port cover, that is the second part may be arranged asymmetrically with respect to the symmetry axis of the transparent view port cover. This can be advantageous if the camera assembly is mounted somewhere else than in the ceiling (for example on a wall).

The lens may be a wide-angle lens. This is advantageous in that a wide-angle lens has a large angle of view.

The second part may comprise an optical assembly. This is advantageous in that the optical assembly may comprise a housing protecting the optics of the optical assembly. Furthermore, the optical assembly is advantageous in that it may comprise at least one lens which may further improve the angle of view presented to the camera.

The optical assembly may be arranged to present a wide angle of view to the camera. This is advantageous in that the camera covers a large surveillance are in one view, without the need to mechanically pan and tilt the imaging part of the camera.

The second part may be attached to the first part by means of adhesive. This is advantageous in that it is simple and cost efficient. Furthermore, an ordinary and unmodified dome can be used which is simple and cost efficient. Moreover, the second part can be arranged anywhere on the transparent view port cover, the position of the second part is not predefined. Additionally, the dome is kept in one piece which is advantageous in that keeping the camera assembly water and dust tight is facilitated.

The second part may be attached to the first part by means of a screw joint. This is advantageous in that the field of view is obstructed as little as possible. Since the transparent view port cover and the second part do not overlap, no optical aberrations are introduced by the transparent view port cover to which the second part is attached to. A gasket may be arranged between the second part and the screw joint in order to make the construction dust tight.

The second part may be arranged to be embedded in the first part. Since the transparent view port cover and the second part do not overlap, no optical aberrations are introduced by the transparent view port cover to which the second part is attached to. Furthermore, if the second part is embedded in the first part by molding the first and the second part together, no detachable parts are used and additionally, the construction is water tight. Since the second part and the first part fit very closely together the distance between the lens and the rest of the dome is minimized.

Generally, all terms used in the claims are to be interpreted according to their ordinary meaning in the technical field, unless explicitly defined otherwise herein. All references to "a/an/the [element, device, component, means, step, etc]" are to be interpreted openly as referring to at least one instance of said element, device, component, means, step, etc., unless explicitly stated otherwise. The steps of any method disclosed herein do not have to be performed in the exact order disclosed, unless explicitly stated.

### Brief Description of the Drawings

Other features and advantages of the present invention will become apparent from the following detailed description of a presently preferred embodiment, with reference to the accompanying drawings, in which
Fig. 1 is schematic side view of an embodiment of a camera assembly according to a first aspect of the invention,
Fig 2A is a schematic cross-sectional side view of an embodiment of the camera assembly according to fig 1,
Fig 2B is a schematic cross-sectional side view of an embodiment of the camera assembly according to fig 1,
Fig 2C is a schematic cross-sectional side view of an embodiment of the camera assembly according to fig 1,
Fig 3A is a schematic side view of the embodiment of the camera assembly according to fig 1, and
Fig 3B is a schematic side view of the embodiment of the camera assembly according to fig 1.

### Detailed Description of an Embodiment

The present invention will now be described more fully with reference to the accompanying drawings, in which certain embodiments of the invention are shown. This invention may, however, be embodied in many different forms and should not be construed as limited to the embodiments set forth herein; rather, these embodiments are provided by way of example so that this disclosure will be thorough and complete, and will fully convey the scope of the invention to those skilled in the art. Like reference numbers refer to like elements throughout the figures and the description.

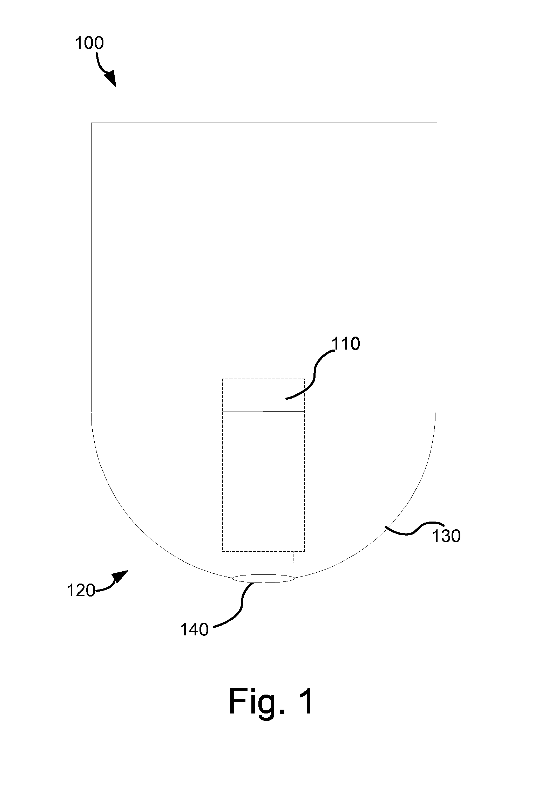

Fig 1 is a schematic side view of an embodiment of a camera assembly 100 according to a first aspect. The camera assembly 100 comprises a camera 110. The camera 110 can be arranged to have panning and tilting capabilities. According to one embodiment, the camera 110 also includes zoom capabilities and can be a so called PTZ camera. Further, any embodiment may include focus capabilities

The camera assembly further comprises a transparent view port cover 120. The transparent view port cover 120 is arranged to at least partly enclose the camera 110. The distance between the transparent view port cover 120 and the inlet of the camera 110 is to be minimized in order to obtain optimized optical quality.

Moreover, the transparent view port cover 120 comprises a first part 130 and a second part 140. The first part 130 and the second part 140 are arranged to present different angles of view to the camera 110. The angle of view can be interpreted as the angular extent of a given scene that can be imaged by the camera 110. An entrance pupil of the camera 110 may be adapted to match optical properties of the second part 140. For example, the entrance pupil can be adapted to adjust zooming and or focusing of the camera 110, when the camera 110 is directed towards the second part 140, in order to enhance the optical quality.

The second part 140 can comprise a lens. The lens can be a wide-angle lens. A wide-angle lens can for example be a lens having a focal length that is substantially shorter than the focal length of a conventional lens. A conventional lens can herein be interpreted as a lens that can provide images that to a human observer appear natural during normal viewing conditions. A wide-angle lens can have an angle of view that is wider than 50°. The wide-angle lens can be an ultra-wide-angle lens. An ultra-wide-angle lens can have an angle of view that is wider than 80°. The wide-angle lens can be comprised of at least two lens elements.

Furthermore, the lens can be a fisheye lens. A fisheye lens is a wide-angle lens with an extremely large angle of view that does not provide a rectilinear image. The fisheye lens can be comprised of at least two lens elements. The fisheye lens can have an angle of view that is wider than 90°.

The second part may be a fisheye converter. The fisheye converter can comprise a fisheye lens as described above. A fisheye converter is advantageous in that it consists of a sealed package that can easily be mounted and dismounted.

In fig 1, the transparent view port cover 120 is embodied as being of substantially spherical shape. It will however be appreciated that the transparent view port cover 120 can for example be embodied as a combination of substantially spherical and substantially cylindrical shape. Moreover, the transparent view port cover 120 can be embodied as being of substantially cylindrical shape.

In one embodiment, the second part 140 is arranged at a point where a center line of the camera assembly 100 intersects the transparent view port cover 120. In some installations, e g when the camera assembly is mounted in a ceiling, this implies that when the camera is directed towards the second part 140, view of the camera 110 is directed essentially vertically down beneath the camera assembly 100.

According to another embodiment, the second part 140 can be arranged next to a point where a symmetry axis 170 of the transparent view port cover 120 intersects the transparent view port cover 120, that is asymmetrically with respect to the symmetry axis 170 of the transparent view port cover 120.

Moreover, the second part 140 can be attached to the first part 130 by means of adhesive. The second part 140 can for example be attached to the first part 130 by means of adhesive by attaching the second part 140 onto the first part 130. Alternatively, the second part 140 can for example be attached in an opening in the first part 130 by means of adhesive.

Further, the second part 140 can be attached to the first part 130 by means of a screw joint. The second part 140 can for example be attached to the first part 130 by screwing the first part 130 and second part 140 together by means of at least one screw joint. Alternatively, the second part 140 can be attached to the first part 130 by screwing the second part 140 into an opening in the first part 130. In this embodiment, the opening in the first part 130 and an outside of the second part 140 can be threaded.

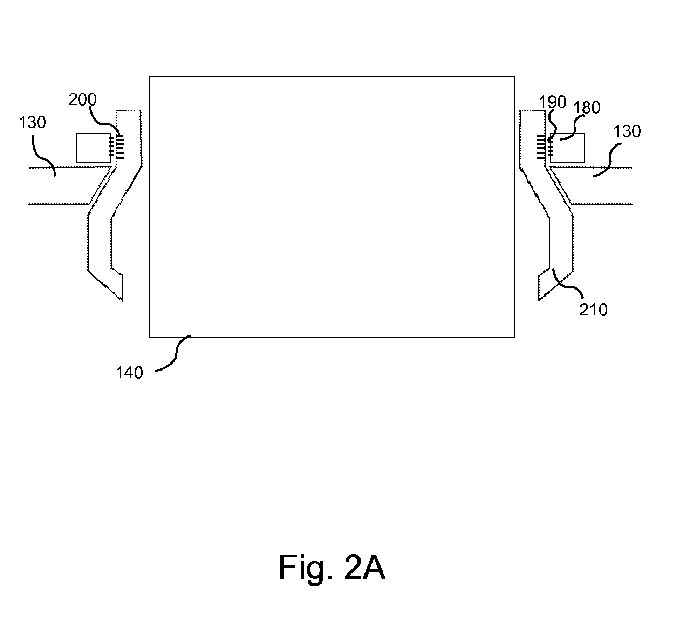

Fig 2A is a schematic cross-sectional side view of an embodiment wherein a threaded metal (preferably aluminum) ring 180 can be used for attaching the second part 140 to the first part 130. The second part 140 may be arranged in a holder 210. The holder 210 can have a threaded outer surface 200. The metal ring 180 may have an outer diameter that is larger than the opening in the first part 130 and a threaded inner surface 190 with a diameter corresponding to the diameter of the opening in the first part 130. The metal ring 180 can be arranged on an inside of the first part 130 around the opening of the first part 130. The inside being the side of the first part 130 having a surface facing the camera 110. The second part 140 and the holder 210 can be inserted through the opening and then screwed into the metal ring 180. Alternatively, the metal ring 180 can be arranged on an outside of the first part 130 around the opening of the first part 130 and the second part is inserted through the opening from an inside of the first part 130 and then screwed into the metal ring 180. A gasket can be arranged between the metal ring 180 and the second part 140 in order to provide a seal for dust.

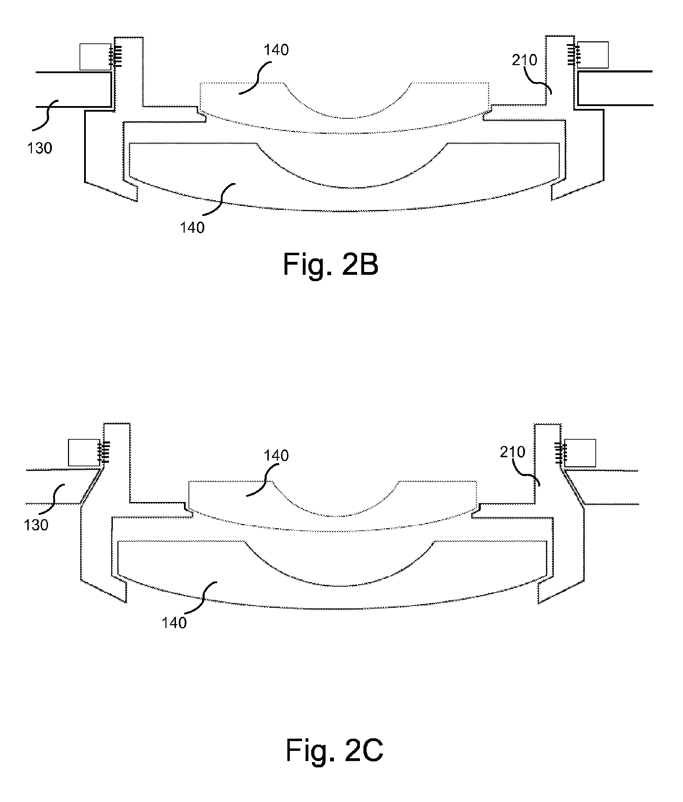

Fig 2B and 2C are schematic cross-sectional side views of an embodiment wherein the second part 140 is embodied as two lenses. In fig 2C, the first part 130 and the holder 210 are embodied having an inclination as compared to in fig 2B. This can be advantageous in that it simplifies the insertion of the holder 210 into the first part 130.

According to yet another embodiment, the second part 140 can be attached to the first part 130 by means of a bayonet mount. For example, the second part 140 may have a number of tabs around a base of the second part 140, which fit into appropriately sized recesses in the opening of the first part 130. The second part 140 is bayonet mounted to the first part 130 by inserting the tabs into the recesses and then rotating the second part 140. The second part 140 may then be locked in place by a spring-loaded pin.

The second part 140 can be arranged to be embedded in the first part 130. For example, the second part 140 and the first part 130 can be molded together. In another embodiment, the first part 130 may be arranged to have an area that is adapted to receive the second part 140. For example, the first part 130 may comprise a hollow cavity that is adapted to receive the second part 140.

In one embodiment, the second part 140 comprises an optical assembly. The optical assembly can be an arrangement of a lens or a system of lenses that is arranged to present an image of an object. The optical assembly can be an objective.

The optical assembly may be arranged to present a wide angle of view to the camera 110. The at least one lens of the optical assembly can be a wide-angle lens. A wide-angle lens is a lens having a focal length that is substantially shorter than the focal length of a conventional lens. A conventional lens can herein be interpreted as a lens that can provide images that to a human observer look natural during normal viewing condition. The lens can be a fisheye lens. A fisheye lens is a wide-angle lens with an extremely large angle of view that does not provide a rectilinear image.

An objective used in an embodiment of the invention may be a wide-angle lens as defined above. Alternatively the objective may be a fisheye lens as defined above.

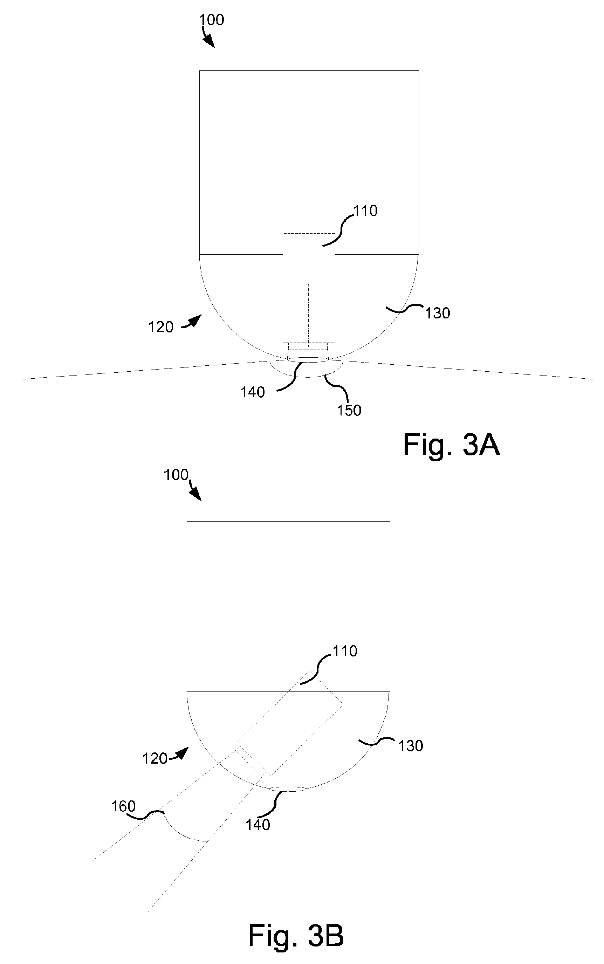

Fig 3A is a schematic side view of the embodiment of the camera assembly 100 according to fig 1. In fig 3A the camera 110 is arranged in the direction of the second part 140 so that the image information recorded by the camera is acquired through the second part 140. The angle of view 150 of the second part is schematically displayed.

Fig 3B is a schematic side view of the embodiment of the camera assembly 100 according to fig 1. In fig 3B the camera 110 is arranged in a direction so that the image information recorded by the camera is acquired through the first part 130. The angle of view 160 of the first part is schematically displayed.

The camera 110 can be panned and tilted. According to one embodiment, the movement of the camera 110 during acquisition of images through the first part 130 can be controlled so that when the camera 110 is panned and tilted, the view from the second part 140 is avoided.

Additionally, in a further embodiment, the camera 110 can be zoomed.

Alternatively, during acquisition of images through the first part 130, the camera 110 can be arranged not to acquire any image information when directed towards the second part 140. In another embodiment, if the camera 110 is to pass over the area of the second part 140, the velocity of the movement of the camera 110 may be increased when the camera is directed towards the second part 140.

In yet another embodiment, still during acquisition through the first part 130, the zooming of the camera 110 can be automatically adjusted when the camera 110 is directed towards the second part 140 in order to improve the appearance of the image information acquired by the camera 110.

In one embodiment, when the camera 110 is directed towards the second part 140, the camera 110 may be rotated into a predefined position if the camera 110 is not already in this position, in order to orient the image view into a predetermined orientation. This is advantageous in that the acquired images are oriented according to the predefined position regardless of how the camera 110 was oriented before it was directed towards the second part 140. This simplifies the analysis of the acquired images since the viewer does not have to try and figure out how the camera 110 is oriented.

When the camera 110 is directed towards the second part 140, the camera 110 is in an overview mode. When in overview mode, the panning, tilting and/or zooming of the camera 110 can be disabled.

In one embodiment, the camera 110 can have a user interface comprising predetermined pan and tilt positions for the camera 110. One predetermined position of the camera 110 could be at the center of the second part 140. This position is the optimum position in respect of angle of view 150 and image quality, for the overview view. During acquisition of images through the first part 130, a predetermined position of the camera 110 could be directed towards for example a door or a popular section of a store.

In one embodiment, a default position of the camera 110 is for example acquisition of images through the second part 140. A user looking at images produced by the camera 110 can indicate, by for example pointing or clicking with a pointer, parts of the image that are of special interest. After the indication by the user, the camera 110 switches to acquisition of images through the first part 130 and switches its position so that it is directed towards the location of the scene that was of special interest in the image of the overview view. This is advantageous in that it combines acquisition of images through the second part 140, that is wide-angle view, covering a large area with acquisition of images through the first part 130, that is normal view, without distorted proportions.

If the user is monitoring an object in acquisition of images through the first part 130 and the object is lost from the view, the acquisition of images through the second part 140 can be used to facilitate finding of the object again.

The camera assembly 100 can comprise a housing. The housing can be adapted for indoor and/or outdoor use. The housing can comprise an outer transparent view port cover enclosing the transparent view port cover 120.

The invention has mainly been described above with reference to a few embodiments. However, as is readily appreciated by a person skilled in the art, other embodiments than the ones disclosed above are equally possible within the scope of the invention, as defined by the appended patent claims.

## Claims

1. Camera assembly (100) comprising:
a camera (110) arranged to be panable and tiltable,
a transparent view port cover (120), **characterized by**
the transparent view port cover (120) comprising a first part (130) and a second part (140),
the first part (130) and the second part (140) being arranged to present different angles of view to the camera (110), and
the second part (140) comprising a lens.

2. Camera assembly (100) according to claim 1, wherein the transparent view port cover (120) is arranged to at least partly enclose the camera (110).

3. Camera assembly (100) according to any one of the preceding claims, wherein the transparent view port cover (120) is of substantially spherical shape.

4. Camera assembly according to any one of the preceding claims, wherein the second part (140) is arranged at a point where a symmetry axis (170) of the transparent view port cover (120) of the camera assembly (100) intersects the transparent view port cover (120).

5. Camera assembly (100) according to claim 1, wherein the lens is a wide-angle lens.

6. Camera assembly (100) according to any one of claims 1-4, wherein the second part (140) comprises an optical assembly.

7. Camera assembly (100) according to claim 6, wherein the optical assembly is arranged to present a wide angle of view to the camera (110).

8. Camera assembly (100) according to any one of the preceding claims, wherein the second part (140) is attached to the first part (130) by means of adhesive.

9. Camera assembly (100) according to any one of the preceding claims, wherein the second part (140) is attached to the first part (130) by means of a screw joint.

10. Camera assembly (100) according to any one of the preceding claims, wherein the second part (140) is arranged to be embedded in the first part (130).

## Amended claims

### Amended claims in accordance with Rule 137(2) EPC.

**1.** Camera assembly (100) comprising:
a camera (110) arranged to be panable and tiltable,
a transparent view port cover (120), **characterized by**
the transparent view port cover (120) comprising a first part (130) and a second part (140),
the first part (130) and the second part (140) being arranged to present different angles of view to the camera (110), and
the second part (140) comprising a lens, wherein the lens is a wide-angle lens.

**2.** Camera assembly (100) according to claim 1, wherein the transparent view port cover (120) is arranged to at least partly enclose the camera (110).

**3.** Camera assembly (100) according to any one of the preceding claims, wherein the transparent view port cover (120) is of substantially spherical shape.

**4.** Camera assembly according to any one of the preceding claims, wherein the second part (140) is arranged at a point where a symmetry axis of the transparent view port cover (120) of the camera assembly (100) intersects the transparent view port cover (120).

**5.** Camera assembly (100) according to any one of claims 1-4, wherein the second part (140) comprises an optical assembly.

**6.** Camera assembly (100) according to claim 5, wherein the optical assembly is arranged to present a wide angle of view to the camera (110).

**7.** Camera assembly (100) according to any one of the preceding claims, wherein the second part (140) is attached to the first part (130) by means of adhesive.

**8.** Camera assembly (100) according to any one of the preceding claims, wherein the second part (140) is attached to the first part (130) by means of a screw joint.

**9.** Camera assembly (100) according to any one of the preceding claims, wherein the second part (140) is arranged to be embedded in the first part (130).

**10.** Camera assembly (100) according to any one of the preceding claims, wherein the camera (110) is arranged to be directable from being directed for acquiring images through the first part (130) into being directed for acquiring images through the second part (140), in response to an indication from a user.

**11.** Camera assembly (100) according to any one of claims 1-9, wherein the camera (110) is arranged to be directable from being directed for acquiring images through the second part (140) into being directed for acquiring images through the first part (130), in response to an indication from a user.

**12.** Method for controlling a camera (110) in a camera assembly (100), the camera assembly (100) comprising a transparent view port cover (120) having a first part (130) and a second part (140), said method comprising:
redirecting the camera from being directed for acquiring images of a wide angle view through the second part (140) of the view port cover (110), said second part (140) including a wide angle lens, into being directed for acquiring images through the first part (140), in response to an indication from a user.

**13.** Method according to claim 12, wherein the images acquired through the first part (130) represent a portion of special interest of the images acquired through the second part (140).
